Europäisches Patentamt

European Patent Office

Office européen des brevets

(11) Publication number: **0 081 914**
**B1**

# EUROPEAN PATENT SPECIFICATION

(45) Date of publication of patent specification: **03.04.85**

(51) Int. Cl.⁴: **C 03 C 17/00,** B 65 D 23/08

(21) Application number: **82306074.4**

(22) Date of filing: **15.11.82**

(54) **Glass container selected base coating process and glass container for use therein.**

(30) Priority: **16.12.81 US 331048**
**16.12.81 US 331420**

(43) Date of publication of application:
**22.06.83 Bulletin 83/25**

(45) Publication of the grant of the patent:
**03.04.85 Bulletin 85/14**

(84) Designated Contracting States:
**DE FR GB IT NL**

(56) References cited:
**DE-A-2 409 448**

(73) Proprietor: **THE D.L.AULD COMPANY**
**1209 North Fifth Street P.O. Box 8459**
**Columbus Ohio 43201 (US)**

(72) Inventor: **Waugh, Robert E.**
**3287 Somerford Road**
**Columbus Ohio (US)**

(74) Representative: **Warren, Francis Charles et al**
**Baron & Warren 18 South End Kensington**
**London W8 5BU (GB)**

Courier Press, Leamington Spa, England.

## Description

The present invention relates to a container coating process and more particularly to a process for coating the base of a bottle in selected areas to prevent shattering and fragment scatter.

Glass containers, such as glass bottles, have long been used as receptacles for soft drinks and various other commodities since they are superior in many respects to other types of containers. Glass containers can be formed in a wide variety of shapes and sizes. Additionally, glass containers are easily sanitized. The recent growth in interest in energy conservation and in resource conservation has increased the attractiveness of glass containers since these containers are easily cleaned and sterilized and are therefore easily reused. Glass containers are relatively sturdy and will hold up through a number of recycling operations although, after approximately 10 cycles, abrasion marks on the glass show and the glass looses its intrinsic strength.

One substantial drawback to the glass container is its tendency to shatter upon impact with a hard surface producing sharp glass shards. The safety risk involved with such breakage is heightened by the fact that many glass containers are pressurized (such as bottles containing carbonated beverages) and the shards which result from shattering the glass container will be scattered over a relatively large area. It has been determined that coating glass bottles with various plastic materials can significantly reduce shattering and reduce the scattering of glass shards. It has also been determined that a suitable coating properly applied to glass bottles will reduce the abrasion marks and reduce breakage during the filling and handling process, thereby increasing the number of times a glass container can be recycled. These techniques also permit a reduction in the amount of glass in the bottle and therefor lighter bottles.

Various techniques and materials have been developed for coating glass containers such as glass bottles (see, for example, U.S. Patent Nos. 4,092,953; 4,027,356; and 4,225,638). The base of the glass bottle presents an unusual coating problem.

Normally, bottles containing carbonated beverages and the like are filled and shipped standing on their base. As a result, a typical soft drink bottle contains thicker glass in its base than in its side wall such that the base can withstand the frequent collisions which occur as the bottles are conveyed along a production line and when the bottles are loaded into shipment containers, shipped and stacked on the grocers shelf. At the same time, because the base of a typical glass bottle is thicker, the base does not shatter to the same extent when the bottle breaks but large pieces of glass blow out from the base of the bottle.

In some cases, it is possible to leave the base uncoated and rely upon a side coating to hinge the base pieces to the bottle sides when blow out occurs. This is particularly true since an overall base coating is less desirable than no coating at all. One means that has been used to bottom coat a bottle is to dip the base of the bottle into a bath of resin. This is undesirable, however, because the bearing surface is coated with resin and the coating, particularly on the bearing surface, is frequently marred, gouged, rubbed, and worn as the bottle rides on the base through cleaning, filling and shipping. This introduces lines of weakness in the coating on the bottle which leads to its easy rupture on being dropped. Furthermore, where the sides and base are coated with a continuous layer of plastic, the coating on the sides of the bottles may peel off if the coating is marred, worn or broken on the bearing surface. In particular, when the bottles are washed in caustic for reuse, the caustic will attack breaks in the coating at the bearing surface, leading to early coating failure.

Another problem that is encountered is that the bases of many glass containers are partially recessed, being drawn slightly inward such that the base is concave. If the base is simply coated uniformly, there is a tendency for the plastic to pool at the center, leaving the peripheries uncoated or only slightly coated such that there is not sufficient base reinforcement.

Thus, there is a need for a glass container having a base designed to be bottom coated without pooling or leaving the peripheries of the base uncoated.

There is also a need for a bottom coating process which is capable of coating only select areas of the base as required to prevent fragment scattering.

The present invention provides a process for coating the selected areas on the base of a glass container such as a soft drink bottle with a plastic material to prevent the base fragments from scattering upon breakage without coating the bearing surface. The invention is embodied in a process which comprises:

a) providing one or more annular channels or a reservoir on the base of the container to be coated, said base presenting a bearing surface,

b) mounting said container with said base upward with respect to the balance of said container,

c) conveying said container to a plastic coating station comprising a nozzle means including a plurality of applicator tubes, said applicator tubes being aligned with the annular channels or reservoir on the base of said container,

d) dispensing predetermined amounts of uncured plastic from a plurality of applicator tubes and into said channels or reservoir such that said amounts flow and meld and at least partially fill said channels or reservoir without coating said bearing surface,

e) curing said plastic, and

f) conveying said bottles from said casting station.

The invention process has the advantage of the material savings which accompany coating selected areas of the base. Also since the bases of many container bottles are recessed, being drawn concavely inward, the invention process prevents the plastic from pooling at the center of the base and thereby ensures reinforcement of the entire base.

In one embodiment of the invention process the containers are primed before they are coated with plastic. This is carried out by conveying the bottles to a priming station where the base is coated with a primer such as silane to improve the adhesion of the cast plastic for the glass container base. The primer may be applied by brushing, spraying, flow coating, etc., but is preferably spray coated. Alternatively, priming may be conducted at a preliminary stage, e.g., as part of a bottle coating process in which the base and sides of the bottle are primed at one time prior to coating either with resin.

A preferred practice is to fill the channels in the base of the bottle with an uncured polyurethane composition prepared by mixing "A" and "B" components such as a polyether polyol component ("A") and a diisocyanate component ("B"), among others. After coating the polyurethane is cured in the channels, for example, by heating.

The present invention also provides a glass container in which channels or reservoirs are defined on the container base by a system of ribs and/or the bearing surface which are longitudinal extensions of the base glass. The recesses are designed to receive a predetermined charge of plastic and confine it to selected areas of the base where reinforcement is required to prevent fragment scattering without coating the bearing surface which introduces lines of weakness in the base glass. The recesses on the base are dimensioned so that the desired reinforcement is obtained without the necessity of coating the entire base.

Likewise, one of the reservoir-forming or channel-forming ribs may be an annular plateau or bearing surface on which the bottle stands. This bearing surface is uncoated. As such, the plastic coating on the base and within the channels is not subject to being easily marred, gouged, rubbed and worn — the uncoated bearing surface bears the brunt of such wear and tear. No break points are therefore formed in the plastic coating in the base area, nor does marring the base coating affect the life of the side coating since the two are independent.

Other channels may be formed in the base by ribs which are longitudinal extensions of the base glass. The channels and reservoir are designed to receive a predetermined charge of plastic materials which is preferably dispensed onto the base as described above. Whether both the channels and the reservoir are charged with plastic depends on the bottle design. At least the channels and in some cases also the central reservoir are filled with plastic in a selected base coating process.

The channels direct the plastic to selected areas of the base. The depth and position of the channels in the base are such that for the particular container capacity being reinforced fragment scattering or so called "blow out" is prevented. It has been found that for a standard 1.5 liter capacity bottle, the base is adequately reinforced with two plastic holding channels which are concentric about the center of the base. The innermost channel preferably has an inside diameter of about 3.56 cm (1 3/8 inch) and an outside diameter of about 4.83 cm (1 7/8 inch). The outer channel is contiguous with the inner channel and separated from it only by the outer rib of the inner channel. Preferably, the outer channel extends to the bearing surface plateau which doubles as the outer wall of the outer channel.

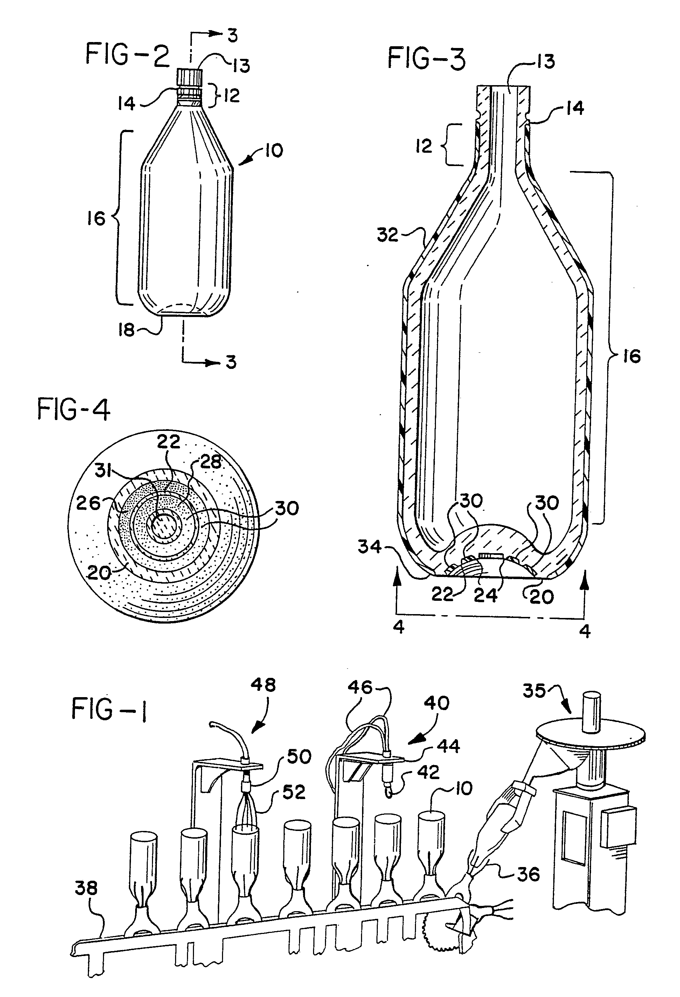

Normally, the invention containers are side coated as well as bottom coated with plastic, but the disclosed base design can also be used to advantage for bottom reinforcement without side coating. Where the side exterior surfaces of a glass bottle are also coated, in another embodiment of the invention, the bottle neck is provided with an annular rib which has the function of causing the side coated plastic to terminate in a clean line that permits the plastic film to be thicker. Also, this prevents the coated plastic from interfering with obtaining a pressure tight cap seal and the cap from scratching or marring the coating as it is removed and replaced. Furthermore, it has been found desirable to position the bearing surface slightly inside the sides of the bottle as shown in Fig. 2 whereby the plastic cast on the sides of the bottle is slightly thicker near the base where additional reinforcement is advantageous. Preferably, the bearing surface diameter is the minimum diameter required to support the bottle. This reduces the glass susceptible to blow out in the base.

The invention will now be further described in more detail and by way of example with reference to the accompanying drawings wherein:

Fig. 1 is a schematic view illustrating one example of a production line for bottom coating the invention bottle;

Fig. 2 is a side elevation of a coated glass bottle in accordance with the present invention;

Fig. 3 is a section parallel the longitudinal axis of the bottle of Fig. 1;

Fig. 4 is a bottom view of the bottle of Fig. 1;

Fig. 5 is a schematic view of the nozzle means used in the bottom coating process as shown in Fig. 4, and

Fig. 6 is a schematic view of a mixing apparatus for use with the invention.

Bottom coating may be accomplished using a coating apparatus such as illustrated in Fig. 1. In the most typical case, the invention bottles will be bottom coated before or after having been side coated using processes such as disclosed in U.S. Patents Nos. 4,092,953 and 4,225,638.

Fig. 1 illustrates the process of the present invention wherein bottles 10 are removed from a side coating line by an unloading means 35 and, in the process, inverted and placed on the bottom coating line wherein the bottles are primed and then coated.

A bottle having one base design used in conjunction with the present invention is shown in Fig. 2 where it is designated by the reference numeral 10. The bottle 10 comprises a neck portion 12 which terminates in a discharge opening 13. The upper extremities of the neck are contoured to accept a closing means such as a screw on or press fit bottle cap. The neck portion 12 of the bottle is also formed with an optional terminal ring 14 which is a radial extension encircling the neck. When present, the ring 14 stops the flow of plastic coated on the sides of the bottle and provides a termination line where the coating will not interefere with sealing the bottle cap and the cap will not damage the coating. Also the cast plastic film does not feather into an unsightly irregular line at the top. The terminal ring also results in a thicker coating at the film termination point and reduces the possibility of delamination and increases reinforcement. The cross section of the ring 14 is preferably a rounded rib having a height from the surface of the bottle of approximately 0.05 to 0.125 cm (0.020 to 0.050 inch).

The mid portion 16 of the bottle flares outwardly from the neck portion 12 and may assume a variety of shapes and contours, for example, the bottle may be shaped according to a particular trade dress representing the origin of the bottle or its contents. The exterior surface of the mid portions of the bottle and the neck are coated with a layer of plastic 32 in the embodiment shown in Figs. 2—4. This may be accomplished using the method and apparatus of commonly assigned U.S. Patent Nos. 4,092,953, 4,207,356 and 4,225,638.

In the illustrated embodiment, the base 18 of the bottle 10 is drawn slightly inward along the longitudinal axis of the bottle as shown in Fig. 3. The thickness of the glass in the base 18 is typically greater than the thickness of the sides in the mid-portion of the bottle.

The base 18 comprises an annular bearing surface 20 which extends outwardly from the base. The bottle is designed to stand on the bearing surface 20, the diameter of which is preferably the minimum diameter required to support the bottle stably. In the illustrated embodiment, inside the bearing surface 20 are two annular ribs 22 and 24 which form the annular channels 26 and 28 and a central reservoir 31 which characterize the present invention. Channels 26 and 28 and reservoir 31 (collectively referred to as "recesses") may be filled with cast plastic 30 in a manner described below. The base areas coated is a function of bottle design. Thus, channels 26 and 28 are optional, in some bottles a simple reservoir defined by the bearing surface is coated. Where the base 18 has an inward slope as illustrated in Fig. 2, the height of the ribs is tapered such that the channels step-wise follow the inwardly sloping contour of the base. Thus, in Fig. 3, rib 22 is slightly higher than rib 24. For a 1.5 liter capacity bottle, rib 22 is approximately 0.16 cm (1/16 inch) as measured from the base of the rib to its peak, and the rib 24 is approximately 0.08 cm (1/32 inch). For bottles having a capacity larger than approximately 2.0 liters, a third concentric channel is desirable.

The width and depth of the channels as well as the number, depend on the size of the bottle and the amount of reinforcement which is desired. Since smaller bottles do not present the dangers which accompany the breakage of larger bottles, it will be apparent that the invention is particularly applicable to bottles having a capacity greater 0.5 liters and more so to 1.0 liter and greater capacity bottles. Using a 1.5 liter bottle as representative of the glass containers coated in accordance with the present invention, the bearing surface 20 is preferably approximately 7.62 cm (3.0 inch) in diameter and sits approximately 0.157 cm (0.062 inch) above the lower surface of the base. The outermost channel 26 which borders the bearing surface in Figs. 3 and 4 is preferably about 0.79 cm (0.312 inch) wide and has a diameter, as measured from the inner edge of the bearing surface of approximately 6.35 cm (2.5 inch). The rib 22 between the channels 26 and 28 preferably has a triangular or truncated triangular cross section and terminates in 0.157 cm (0.062 inch) rounded peak. The inner channel 28 is preferably 0.73 cm (0.287 inch) wide and has a 3.56 cm a (1 3/8 inch) diameter as measured from the outer edge of rib 24. The actual rib design must be determined for each different bottle design.

One bottle design used in conjunction with the present invention provides for a slightly thicker film at the bottom termination line 34 of the side coating 32 which provides additional reinforcement to the protruding side portions at the bottom of the bottle which are vulnerable to collision and breakage. This enhanced thickness is achieved by positioning the bearing surface 20 slightly inside the side wall of the bottle as shown.

In bottom coating in accordance with the present invention, the bottles are held bottom up by means of neck holding chucks 36 which are advantageously mounted and interconnected by a conveying means such as a chain conveyor 38. Once on the line, the bottles 10 are conveyed to a primer station 40 where the bottles are sprayed with primer dispensed from a nozzle 42 mounted on an overhanging platform 44 supplied with a primer composition through supply lines 46 which are pressurized. Heat may be applied to remove any solvent in the primer composition although if the bottle is pre-heated (e.g., as part of a coating, washing, or manufacturing process), the solvent will flash off automatically.

It is desirable to prime the glass bottle with a silane before coating. As an example, a mixture of approximately 2% castor oil and up to approximately 2% silane (Dow 6020, 6040 or 6075 from Dow Corning Corp.) which are respectively, 3-(2-aminoethylamine) propyltrimethoxysilane, glycidoxypropyltrimethoxysilane and vinyltriacetoxysilane) in a solvent (70% isopropyl alcohol and 30% acetone) may be used. Other known silane primers may also be used. As an alternative to spraying the primers may be applied by dipping or other coating process, followed by drying to remove the solvent. Alternatively the primer may be applied to the entire bottle as an initial step in a continuous bottle coating process.

The bottle may be coated with various plastics. A preferred coating, however, is a liquid polyurethane plastic of the type disclosed in U.S. Patent No. 4,092,953, which is a mixture of "A" and "B" components. Basically that mixture is one of a polyether polyol component ("A") which may be difunctional, trifunctional and/or tetrafunctional polypropylene glycol containing a suitable catalyst and a diisocyanate component ("B") such as an aliphatic diisocyanate. An example of the diisocyanate is Desmodur from Mobay Chemical Co. or IPDI from Chemische Werke, Huls, and the polyether polyol may be one or more of the Pluracol materials (P-410 or TP-440) from BASF Wyandotte. It may also be a polyether-polyester polyol combination. The ratio of components A : B is preferably 50—60 : 40—50. A polyester polyol or polylactone polyol may be used in place of the polyether polyol. The mixture of "A" and "B" components of this type cures through catalytic action, under heat, such as produced by infrared radiation. Although the aforementioned two component polyurethane is preferred, single component, photocurable, polyurethanes of known types can also be used. A two part epoxy may also be useful.

After priming, the bottles are moved to a base coating station 48 where in the illustrated embodiment the channels 26 and 28 on the base of the bottle are selectively coated with a liquid uncured plastic dispensed through nozzle means 50 which is provided with a plurality of applicator tubes 52. The areas of the bottle base coated in accordance with the invention vary with the bottle design, the objective in each case being to prevent fragment scattering from the base in the event of breakage. For example, in some cases the base may be formed with a simple reservoir as defined by the bearing surface 20, in which case the reservoir is selectively coated in the present invention without coating the bearing surface itself. Prior to plastic coating the bottles may be heated to 43—54°C (110—130°F) to aid the flow of the coating onto the bottle.

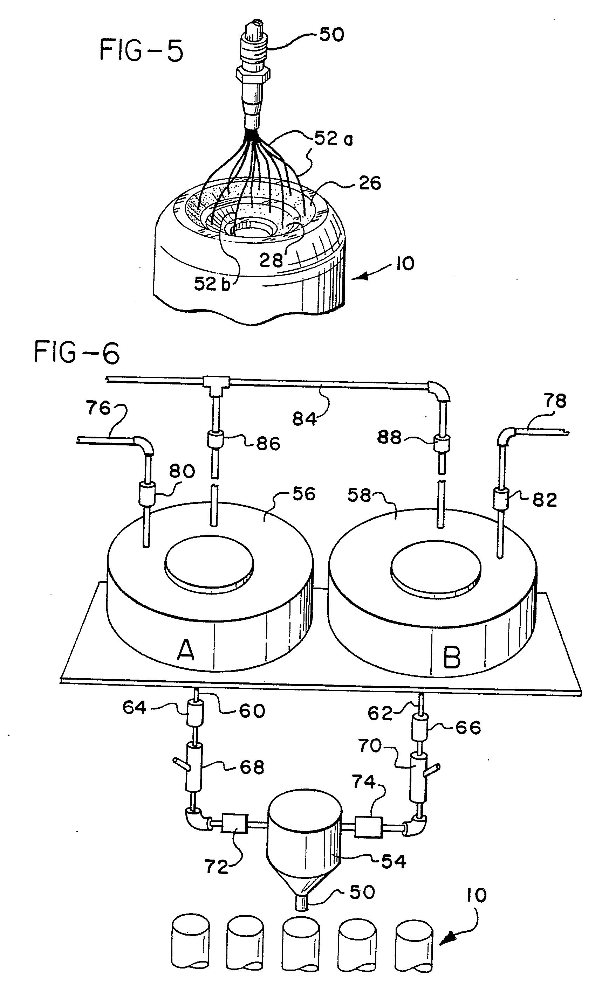

As shown more fully in Fig. 5, which illustrates a nozzle means for bottom coating a 1.5 liter soft drink bottle, the nozzle means 50 comprises a first set of applicator tubes 52a and a second set 52b. Sets 52a and 52b are each mounted in concentric circular patterns corresponding to the channels 26 and 28 to be coated. Each applicator tube delivers a quantity of plastic to the appropriate recess in the base of the bottle which is predetermined to meld with the quanta delivered from the other applicator tube serving that recess and fill the channel without overfilling it. In the case of a bottom as in Fig. 4, because the outside channel 26 is larger and has a greater capacity for cast plastic than the inside channel 28, there are more tubes in the first set of applicator tubes 52a than the second set 52b. In this manner, more plastic is dispensed to the outer channel when a single pumping station casting machine is used.

If the machine and nozzles are designed to give a constant flow rate in grams per minutes per tube, the outer channel will receive more plastic than the inner channel for a given cast time. As an alternative to using more applicator tubes in set 52a than set 52b applicator tubes 52a and 52b may be supplied by two individually adjustable pumping stations that will allow the flow rate per pumping station to be adjusted so that set 52a delivers more plastic to the base of the bottle within the preset base coating time than set 52b delivers to the inner channel. The number of applicator tubes and the spacing between the tubes in an individual nozzle depends on the capacity of the bottle, and more directly, the size of the base. For example, in the case of casting a base as in Fig. 4, it has been found, however, that between 10 and 15 tubes spaced apart approximately 1.27 to 1.90 cm (1/2 to 3/4 inch) may be used in the set serving the outer channel and 6 to 8 tubes spaced 1.27 to 1.90 cm (1/2 to 3/4 inch) may be used in the set of applicator tubes servicing the inner channel in a 1.5 liter bottle. The tubes preferably have an inner diameter of approximately 0.083 cm (0.033 inch) and an outer diameter of approximately 0.127 cm (0.050 inch). Each set of tubes may be maintained in the circular orientation using a spacer bar, or as illustrated in Fig. 5, the tubes may be of a sturdy but flexible material which maintains its location relative to the base of the bottle under the pressure from the casting head. Preferably, the applicator tubes 52 of the nozzle means 50 are designed for each different type of bottle so the desired arrangement is fixed for the size of the base and the channel positions for the particular bottle design.

The invention process is particularly advantageous because it permits coating a simple recessed base without having the coating pool in the center of the base. This is possible because the quantity of plastic delivered to any area of the base can be adjusted similar to as described above to prevent pooling. In a preferred embodiment the cast plastic is a mixture of components "A" and "B" as described below. These components may be supplied to the nozzle means 50 using a mixing apparatus as shown in Fig. 6. Casting head 54 has a nozzle means 50 which has a plurality of applicator tubes 52 (not shown in Fig. 6).

The "A" and "B" materials are supplied from tanks 56 and 58 which may be stirred for the purpose of degassing. The degassed material then flows down pipes 60 and 62 through ball valves 64 and 66 through filters 68 and 70 and metering devices 72 and 74 to the casting and mixing head 54, wherein the components are mixed. Located beneath the casting head 54 is the conveyor which carries the bottles 10 with which the casting head 54 is timed such that when a bottle 10 is under the casting head, a predetermined amount of plastic is cast and then the conveyor moves the next bottle into position.

Tanks 56 and 58 are supplied with the "A" and "B" components, respectively, through supply lines 76 and 78 equipped with ball valves 80 and 82. The tanks 56 and 58 may be pressurized using air or nitrogen which is supplied under pressure to the tanks through line 84 via ball valves 86 and 88 which prevent tanks 56 and 58 from losing pressure when line 84 is disconnected.

Having described the invention in detail and by reference to specific embodiments thereof, it will be apparent that numerous variations and modifications are possible without departing from the invention as defined by the following claims.

**Claims**

1. A process for coating selected areas on the base of a glass container (10) such as a soft drink bottle which is characterized by the steps of:

a) providing one or more annular channels (26, 28) or a reservoir (31) on the base of the container (10) to be coated, said base presenting a bearing surface (20),

b) mounting said container (10) with said base directed upward with respect to the balance of said container,

c) conveying said container (10) to a plastic casting station comprising a nozzle means (50) having a plurality of applicator tubes (52), said applicator tubes (52) being aligned with the annular channels (26, 28) or reservoir (31) on the base of said container,

d) dispensing predetermined amounts of uncured plastic (30) from a plurality of applicator tubes (52) and into said channels (26, 28) or reservoir (31) such that said amounts flow and meld and at least partially fill said channels (26, 28) or reservoir (31) without coating said bearing surface,

e) curing said plastic (30), and

f) conveying said containers (10) from said casting station.

2. The process of claim 1, characterized in that said base (18) of said container (10) is primed prior to dispensing said uncured plastic into said channels (26, 28) or reservoir (31).

3. The process of claim 2, characterized in that said base (18) is primed after said step b) and before said step c).

4. The process of claim 1, 2 or 3, characterized in that said container (10) is heated to a temperature of about 43 to 54°C (110 to 130°F) immediately prior to dispensing said uncured plastic into said channels (26, 28) or reservoir (31).

5. The process of any preceding claim, characterized in that said base (18) is formed with channels (26, 28) concentric about the center of said base comprising an outside channel (26), an inside channel (28).

6. The process of claim 5, characterized in that the plurality of applicator tubes (52) comprises a first set of applicator tubes (52a) aligned with said outside channel (26) and a second set of applicator tubes (52b) aligned with said inside channel (28) and said dispensing is controlled such that said first and second set of applicator tubes substantially fill said outside and inside channels (26, 28).

7. The process of claim 6, characterized in that said first set of applicator tubes (52a) outnumber said second set of applicator tubes (52b).

8. The process of claim 5, 6 or 7, characterized in that said base (18) is drawn longitudinally inward such that said base (18) is concave and said channels (26, 28) prevent said plastic from pooling at the center of said base (18).

9. The process of claim 1, characterized in that said base (18) is formed with a center reservoir as defined by said bearing surface (20).

10. The process of any preceding claim, characterized in that said container (10) is a soft drink bottle.

11. The process of any preceding claim, characterized in that said plastic (30) is an uncured polyurethane prepared by mixing a polyether-polyol component and a diisocyanate component.

12. A glass container of the type which is designed to be coated with a plastic material to reduce breakage and shattering comprising a neck portion (12) which terminates in a discharge opening (13), a mid-portion (16) and a base (18), said base presenting a bearing surface (20) upon which said bottle stands, characterized in that said base comprises a plurality of concentric annular ribs (22, 24) as longitudinal extensions defining first and second annular channels (26, 28), said channels being concentric about the center of said base with said first channel (26) being outside said second channel (28) and said second channel surrounding a reservoir (31), said channels and reservoir being dimensioned and located to aid in preventing said container base from shattering when filled with a charge of cast plastic (30).

13. The glass container of claim 12, characterized in that said first channel (26) is defined by said bearing surface (20) and a first rib (22), said second channel (28) is defined by said first rib (22) and a second rib (24) concentric and inside the first and said reservoir (31) is defined by said second rib (24).

14. The glass container of claim 13, characterized in that said base (18) is drawn inward along the longitudinal axis of said container and the height of said first rib (22), as measured from the base of said rib, is greater than the height of said second rib (24).

15. The glass container of claim 13, characterized in that the height of said ribs (22, 24) is such that a line of sight from the top of said first rib (22) to the top of said second rib (24) generally parallels the inward draw of said base.

16. The glass container as claimed in any of claims 12 to 15, characterized in that said channels (26, 28) are filled with a plastic material (30).

17. The glass container as claimed in any of claims 12 to 16, characterized in that the mid-portion (16) and neck portions (12) of said container (10) are coated with a plastic material (30).

18. The glass container as claimed in any of claims 12 to 17, characterized in that said neck portion (12) of said container comprises an annular rib (14).

**Revendications**

1. Procédé pour réaliser un revêtement sur des parties prédéterminées du fond d'un récipient de verre (10) tel qu'une bouteille pour boissons non alcoolisées, caractérisé en ce qu'il comprend les phases suivantes:

a) l'aménagement d'une ou plusieurs rainures annulaires (26, 28) ou d'un logement creux (31) dans le fond du récipient (10) à recouvrir, ledit fond comprenant une surface de support (20),

b) le positionnement dudit récipient (10) dans une position dans laquelle ledit fond est dirigé vers le haut par rapport au centre de gravité dudit récipient,

c) le transport dudit récipient (10) vers un poste de moulage de matière plastique comprenant une tête d'extrusion (50) qui comporte une série de tubes de distribution (52), lesdits tubes de distribution (52) étant alignés sur les rainures annulaires (26, 28) ou le logement creux (31) prévus dans le fond du récipient,

d) la distribution de quantités prédéterminées d'une matière plastique fluide (30) à partir de plusieurs tubes de distribution (52) dans lesdites rainures (26, 28) ou ledit logement creux (31) de sorte que cette matière s'écoule dans lesdites rainures (26, 28) ou ledit logement (31) et les remplisse au moins partiellement sans recouvrir ladite surface de support (20),

e) le durcissement de ladite matière plastique (30) et

f) l'extraction desdits récipients (10) à partir dudit poste de moulage.

2. Procédé suivant la revendication 1, caractérisé en ce que ledit fond (18) du récipient (10) est soumis à un traitement préparatoire avant l'application de la matière plastique fluide dans lesdites rainures (26, 28) et ledit logement creux (31).

3. Procédé suivant la revendication 2, caractérisé en ce que ledit fond (18) est soumis au traitement préparatoire après la phase b) et avant la phase c).

4. Procédé suivant l'une quelconque des revendications 1, 2 ou 3, caractérisé en ce que ledit récipient (10) est chauffé à une température de l'ordre de 43°C à 54°C directement avant l'application de la matière plastique fluide dans les rainures (26, 28) ou le logement creux (31).

5. Procédé suivant l'une quelconque des revendications précédentes, caractérisé en ce que ledit fond (18) comporte des rainures (26, 28) concentriques par rapport au centre du fond et qui comprennent une rainure extérieure (26) et une rainure intérieure (28).

6. Procédé suivant la revendication 5, caractérisé en ce que la série de tubes de distribution (52) comprend un premier groupe de tubes de distribution (52a) alignés sur la dite rainure extérieure (26) et une deuxième groupe de tubes de distribution (52b) alignés sur ladite rainure extérieure (28), l'application de matière plastique étant ajustée de sorte que ledit premier et ledit deuxième groupe de tubes de distribution remplissent sensiblement les rainures extérieure et intérieure (26, 28).

7. Procédé suivant la revendication 6, caractérisé en ce que ledit premier groupe (52a) comprend un nombre de tubes de distribution supérieur à celui dudit deuxième groupe (52b).

8. Procédé suivant l'une quelconque des revendications 5, 6 ou 7, caractérisé en ce que ledit fond (18) est étiré en direction longitudinale vers l'intérieur pour former un fond concave 18, lesdites rainures (26, 28) empêchant une accumulation de matière plastique au centre du fond (18).

9. Procédé suivant la revendication 1, caractérisé en ce que ledit fond (18) présente un logement creux central délimité par ladite surface de support (20).

10. Procédé suivant l'une quelconque des revendications précédentes, caractérisé en ce que ledit récipient (10) est une bouteille pour boissons non alcoolisées.

11. Procédé suivant l'une quelconque des revendications précédentes, caractérisé en ce que ladite matière plastique (30) est un polyuréthane fluide préparé par le mélange d'un composant polyether-polyol et d'un composant de diisocyanate.

12. Récipient de verre du type destiné à recevoir un revêtement en une matière plastique réduisant les risques de rupture et de fissurage et comprenant un col (12) muni d'une ouverture de déchargement (13), une partie intermédiaire (16) et une embase ou un fond (18), ledit fond présentant une surface de support (20) sur laquelle repose le récipient, caractérisé en ce que ledit fond comprend une série de nervures annulaires concentriques (22, 24) formées par des prolongements longitudinaux et délimitant la première et la deuxième rainures annulaires (26, 28), lesdites rainures étant concentriques au centre dudit fond et la première rainure (26) étant située à l'extérieur de la deuxième rainure (28, ladite deuxième rainure (28) entourant un logement creux (31), lesdites rainures et ledit logement creux étant dimensionnés et positionnés d'une manière telle qu'ils empêchent le fissurage dudit fond lorsqu'ils sont remplis avec une charge d'une matière plastique moulée (30).

13. Récipient de verre suivant la revendication 12, caractérisé en ce que ladite première rainure (26) est délimitée par ladite surface de support et par une première nervure (22), ladite deuxième rainure (28) étant délimitée par ladite première nervure (22) et une deuxième nervure (24) concentrique par rapport à la première nervure et située à l'intérieur de celle-ci, ledit logement creux (31) étant délimité par ladite deuxième nervure (24).

14. Récipient de verre suivant la revendication 13, caractérisé en ce que ledit fond (18) est étiré vers l'intérieur dans le sens de l'axe longitudinal du récipient et la hauteur de la première nervure (22) au-dessus de sa base est plus grande que celle de ladite deuxième nervure (24).

15. Récipient de verre suivant la revendication 13, caractérisé en ce que la hauteur desdites nervures (22, 24) est telle que la ligne de visée du sommet de la première nervure (22) sur le sommet de la deuxième nervure (24) est sensiblement parallèle à la pente dudit fond.

16. Récipient de verre suivant l'une quelconque des revendications 12 à 15, caractérisé en ce que lesdites rainures (26, 28) sont remplies avec une matière plastique (30).

17. Récipient de verre suivant l'une quelconque des revendications 12 à 61, caractérisé en ce que la partie intermédiaire (16) et le col (12) du récipient (10) présentent un revêtement en une matière plastique.

18. Récipient de verre suivant l'une quelconque des revendications 12 à 17, caractérisé en ce que ledit col (12) du récipient présente une nervure annulaire (14).


**Patentansprüche**

1. Verfahren zur Beschichtung ausgewählter Flächen am Boden eines Glasgefäßes (10), wie zum Beispiel einer Getränkeflasche, gekennzeichnet durch die folgenden Verfahrensschritte

a) Anordnen eines oder mehrerer ringförmiger Kanäle (26, 28) oder einer reservoir-ähnlichen Ausnehmung in dem die Standfläche (20) Gefässes (10) bildenden Boden (10),

b) Aufstellen des Gefäßes (10) mit dem Boden nach oben und dem Gefäß im Gleichgewicht,

c) Transport des Gefäßes (10) zu einer Kunststoff-Spritzgieß-Station, bestehend aus einer Düsen-Anordnung (50) mit einer Anzahl Auftragsröhrchen (52), wobei die Auftragsröhrchen (52) auf die ringförmigen Kanäle (26, 28) oder die reservoir-ähnliche Ausnehmung (31) im Boden des Gefäßes ausgerichtet sind,

d) Verteilen einer vorbestimmten Menge des ungehärteten Kunststoff-Materials über eine Anzahl Auftragsröhrchen (52) in die Kanäle (26, 28) oder die reservoir-ähnliche Ausnehmung (31) derart, daß die abgegebene Menge fließt und schmilzt und zumindest teilweise die Kanäle (26, 28) oder die reservoir-ähnliche Ausnehmung (31) füllt, ohne die Standfläche zu beschichten,

e) Aushärten des Kunststoff-Materials (30), und,

f) Abtransport der Gefäße (10) von der Spritzgieß-Station.

2. Verfahren nach Anspruch 1, dadurch gekennzeichnet, daß der Boden (18) des Gefäßes (10) vor dem Verteilen des ungehärteten Kunststoffes in die Kanäle (26, 28) oder die reservoir-ähnliche Ausnehmung (31) grundiert wird.

3. Verfahren nach Anspruch 2, dadurch gekennzeichnet, daß der Boden (18) nach dem Verfahrensschritt b) und vor dem Verfahrensschritt c) grundiert wird.

4. Verfahren nach Anspruch 1, 2 oder 3, dadurch gekennzeichnet, daß das Gefäß (10) unmittelbar vor dem Verteilen des ungehärteten Kunststoffs in die Kanäle (26, 28) oder die reservoirähnliche Ausnehmung (31) auf eine Temperatur von 43 bis 54°C aufgeheizt wird.

5. Verfahren nach einem der vorhergehenden Ansprüche, dadurch gekennzeichnet, daß der Boden (18) eingeformte Kanäle (26, 28) konzentrisch um den Mittelpunkt des Bodens aufweist, die den äußeren Kanal (26) und den inneren Kanal (28) bilden.

6. Verfahren nach Anspruch 5, dadurch gekennzeichnet, daß die Vielzahl der Auftragsröhrchen (52) aus einem ersten Satz auf den äußeren Kanal (26) ausgerichteter Auftragsröhrchen (52a) und einem zweiten Satz auf den inneren Kanal (28) ausgerichteter Auftragsröhrchen (52b) besteht, und daß das Verteilen derart gesteuert wird, daß der erste und zweite Satz Auftragsröhrchen im wesentlichen den äußeren und inneren Kanal (26, 28) füllen.

7. Verfahren nach Anspruch 6, dadurch gekennzeichnet, daß der erste Satz Auftragsröhrchen (52a) den zweiten Satz Auftragsröhrchen (52b) bezüglich der Anzahl der Röhrchen übertrifft.

8. Verfahren nach Anspruch 5, 6 oder 7, dadurch gekennzeichnet, daß der Boden (18) in Längsachse des Gefäßes derart nach innen eingezogen ist, daß der Boden (18) eine konkave Form aufweist, und die Kanäle (26, 28) das Absetzen oder Ablagern des Kunststoffes in der Mitte des Bodens (18) verhindern.

9. Verfahren nach Anspruch 1, dadurch gekennzeichnet, daß der Boden (18) mittig mit einer reservoir-ähnlichen Ausnehmung ausgeformt ist, die durch die Standfläche (20) begrenzt wird.

10. Verfahren nach einem der vorhergehenden Ansprüche, dadurch gekennzeichnet, daß das Gefäß (10) eine Flasche für alkoholfreie Getränke ist.

11. Verfahren nach einem der vorhergehenden Ansprüche, dadurch gekennzeichnet, daß das Kunststoff-Material (30) ein ungehärtetes durch Mischung von Polyäther-Polyol-Bestandteilen und Diisozyanat-Bestandteilen aufbereitetes Polyurethan ist.

12. Glasgefäß der Gattung, das zur Minderung der Bruch- und Splitterungsgefahr mit einem Kunststoff-Material beschichtet wird, bestehend aus einem in einer Ausgießöffnung (13) endenden Flaschenhals-Bereich (12), einem mittleren Bereich (16) und einem Boden (18), wobei der Boden (18) eine Standfläche (20) bildet, auf der die Flasche steht, dadurch gekennzeichnet, daß der Boden (18) eine Anzahl von in Längsrichtung sich erstreckenden und einen ersten und zweiten Kanal (26, 28) beildende, konzentrische, ringförmige Rippen (22, 24) aufweisen, wobei die Kanäle konzentrisch um den Mittelpunkt des Bodens angeordnet sind und mit dem ersten Kanal (26) außerhalb des zweiten Kanals (28) sowie mit dem zweiten Kanal (28) eine reservoir-ähnliche Ausnehmung umschließend, und daß die Kanäle und die reservoir-ähnliche Ausnehmung so bemessen und angeordnet sind, um ein Splittern des Gefäßbodens zu verhindern, wenn er mit einer Charge des Kunststoff-Materials gefüllt wird.

13. Glasgefäß nach Anspruch 12, dadurch gekennzeichnet, daß der erste Kanal (26) durch die Standfläche (20) und eine erste Rippe (22) begrenzt, daß der zweite Kanal (28) durch die erste Rippe (22) und eine zweite Rippe (24) konzentrisch und unnerhalb der ersten Rippe begrenzt ist und daß die reservoir-ähnliche Ausnehmung (31) durch die zweite Rippe (24) begrenzt ist.

14. Glasgefäß nach Anspruch 13, dadurch gekennzeichnet, daß der Boden (18) entlang der Längsachse des Gefässes nach innen eingezogen ist, und die Höhe der ersten Rippe (22), gemessen vom Fuß der Rippe, größer ist als die Höhe der zweiten Rippe (24).

15. Glasgefäß nach Anspruch 13, dadurch gekennzeichnet, daß die Höhe der Rippen (22, 24) derart ausgelegt sind, daß die Sichtlinie über den Scheitel der ersten Rippe (22) und den Scheitel der zweiten Rippe (24) parallel zum Einzug des Bodens verläuft.

16. Glasgefäß nach einem der Ansprüche 12 bis 15, dadurch gekennzeichnet, daß die Kanäle (26, 28) mit einem Kunststoff-Material (30) gefüllt sind.

17. Glasgefäß nach einem der Ansprüche 12 bis 16, dadurch gekennzeichnet, dass der mittler Bereich (16) und die Halsbereiche (12) des Gefässes (10) mit einem Kunststoff-Material (30) beschichtet sind.

18. Glasgefäß nach einem der Ansprüche 12 bis 17, dadurch gekennzeichnet, daß der Halsbereich (12) des Gefässes eine ringförmige Rippe (14) aufweist.

**0 081 914**

FIG-2

FIG-3

FIG-4

FIG-1

FIG—5

FIG—6